(19) **Europäisches Patentamt / European Patent Office / Office européen des brevets**

(11) **EP 3 021 385 B1**

(12) # EUROPEAN PATENT SPECIFICATION

(45) Date of publication and mention
of the grant of the patent:
**16.10.2019 Bulletin 2019/42**

(51) Int Cl.:
*H01M 4/134* (2010.01)          *H01M 10/052* (2010.01)
*H01M 4/38* (2006.01)

(21) Application number: **14822846.3**

(22) Date of filing: **08.07.2014**

(86) International application number:
**PCT/KR2014/006114**

(87) International publication number:
**WO 2015/005648 (15.01.2015 Gazette 2015/02)**

(54) **ANODE ACTIVE MATERIAL FOR LITHIUM SECONDARY BATTERY, COMPOSITION FOR ANODE INCLUDING SAME, AND LITHIUM SECONDARY BATTERY**

ANODENAKTIVES MATERIAL FÜR EINE LITHIUMSEKUNDÄRBATTERIE, ZUSAMMENSETZUNG FÜR ANODE DAMIT UND LITHIUMSEKUNDÄRBATTERIE

MATÉRIAU ACTIF D'ANODE POUR BATTERIE SECONDAIRE AU LITHIUM, COMPOSITION POUR ANODE LE COMPRENANT, ET BATTERIE SECONDAIRE AU LITHIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.07.2013 KR 20130080493**

(43) Date of publication of application:
**18.05.2016 Bulletin 2016/20**

(73) Proprietor: **Samsung Electronics Co., Ltd.
Gyeonggi-do 16677 (KR)**

(72) Inventors:
• **LEE, Ju Myeung
Cheongju-si
Chungcheongbuk-do 361-300 (KR)**
• **SHIM, Kyu Eun
Daejeon 301-837 (KR)**
• **CHANG, Dong Gyu
Daejeon 301-131 (KR)**
• **YANG, Woo Young
Daejeon 302-747 (KR)**

(74) Representative: **Elkington and Fife LLP
Prospect House
8 Pembroke Road
Sevenoaks, Kent TN13 1XR (GB)**

(56) References cited:
WO-A1-2013/025707     WO-A2-2011/068911
GB-A- 2 483 372       JP-A- 2004 335 272
KR-A- 20090 001 316   KR-A- 20100 080 479
KR-A- 20130 004 536   US-A1- 2009 061 322

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure relates to an anode active material for a lithium secondary battery, and an anode composition and a lithium secondary battery including the lithium secondary battery, and, in particular, to an anode active material for a lithium secondary battery, and an anode composition and a lithium secondary battery including the lithium secondary battery, wherein the anode active material includes silicon secondary particles, in which amorphous silicon primary particles and crystalline silicon primary particles are agglomerated, to provide better lifespan characteristics and initial charge and discharge efficiency to the lithium secondary battery.

BACKGROUND ART

The electronic industry and the information communication industry have been rapidly developing due to introduction of portable, small-size, light-weight, and high-performance electronic devices. As a power source of these electronic devices, lithium secondary batteries that embody high capacity and high performance are highly demanded. Lithium secondary batteries are repeatedly charged or discharged by intercalation or deintercalation of lithium ions, and are used as a necessary power source for small- and large devices including electric vehicles, as well as portable electronic devices for information-communication.

Regarding lithium secondary batteries, a material that is electrochemically reactive is used in a cathode and an anode to generate power. For example, when lithium ions intercalate or deintercalated in a cathode or an anode, chemical potential changes, leading to the production of electric energy.

Lithium secondary batteries are manufactured as follows: a material that enables reversible intercalation or deintercalation of lithium ions is used as a cathode active material and an anode active material, and an organic electrolyte or a polymer electrolyte are filled between a cathode and an anode.

For an anode active material for lithium secondary batteries, various carbonaceous materials that enable intercalation or deintercalation of lithium ions can be used. Examples of the carbonaceous materials are artificial graphite, natural graphite, and hard carbon. Lithium ions intercalate or deintercalated between crystal surfaces of a carbon electrode during charging and discharging, thereby performing an oxidation reaction and a reduction reaction. However, a carbonaceous anode has a limited capacity of at most 372 mAh/g (844mAh/cc), and accordingly, there is a limit in increasing capacity. Thus, the carbonaceous anode may not be appropriate for use as an energy source for future generations.

In response, as an anode material having higher capacity than the carbonaceous material, silicon (Si), tin (Sn), or an oxide of these is known to form a compound with lithium, allowing reversible intercalation or deintercalation of a great amount of lithium. Accordingly, the research into these materials is actively performing. For example, silicon has a maximum capacity of about 4,200 mAh/g (9,800 mAh/cc) in theory, a value that is higher than that of a graphite-based material. Due to such a high capacity, silicon is regarded as a major candidate for a high-capacitance anode material.

However, when silicon reacts with lithium, a crystal structure thereof may change. When a maximum absorption amount of lithium is stored during charging, silicon is converted into $Li_{4.4}Si$. In this case, silicon may expand in volume up to about 4.12 times the volume of silicon before the volumetric expansion. Mechanical stress, occurring when silicon volumetrically expands, may cause cracks inside an electrode and the surface of the electrode. And, when lithium ions deintercalate due to discharging, silicon shrinks. When this cycle of charging and discharging is repeated, an anode active material may be pulverized, and the pulverized anode active material may agglomerate, leading to electric separation thereof from a current collector. Also, due to a large change in a contact interface among anode active material particles, when the charging and discharging cycle is repeatedly performed, capacity may be rapidly decreased, and accordingly, the cycle lifespan may be shortened.

However, the rapid volumetric change of a silicon (Si) metal material can be prevented by reducing the size of particles. For example, silicon is mechanically pulverized in small size, and then, dispersed in a conductive material to prepare a Si-C composite for use as an anode active material. In this case, however, due to the increase in the specific surface area, silicon may cause a side reaction with an electrolyte. In detail, when silicon is pulverized into nano particles, the surface of silicon may be easily oxidized and an oxide film may be formed on silicon particles, leading to a decrease in initial charge and discharge efficiency of a battery, and a decrease in the capacity of the battery. The surface oxidation may be more problematic, when the size of particles is reduced to a nano scale and a volume ratio of the oxide film with respect to metal increases. Also, the pulverized silicon may additionally react with an electrolyte to form a solid electrolyte interface (SEI) layer, and this additional reaction may repeatedly occur, thereby depriving of an electrolytic solution.

To suppress the formation of an oxidation thin film and to improve conductivity, Cited Document D1 (Japanese Patent Publication No. 2000-215887) discloses that a carbon layer is formed on the surface of Si particles by chemical deposition. However, this disclosure fails to prevent the large volumetric change accompanied by during charging and discharging, which is an obstacle a silicon anode should overcome, deterioration of current collecting properties, and a decrease in the cycle lifespan.

To suppress the volumetric expansion, Cited Document D2 (Japanese Patent Publication No. 2003-109590) discloses that a grain boundary of polycrystalline particle is used as a buffer for volumetric change, and an alumina-containing silicon solution is rapidly cooled. However, according to the disclosed method, it is difficult to control a cooling rate and reproduce stable physical properties.

Cited Document D3 (Japanese Patent Publication No. 2005-190902) discloses a stack structure of a silicon active material to prevent volumetric expansion, and Cited Document D4 (Japanese Patent Publication No. 2006-216374) discloses that a core portion including silicon particles is spaced apart from a porous shell portion to absorb a volumetric change. However, as described above, the coating the surface of silicon to improve cyclic characteristics of an anode material is economically inefficient, and the obtainable capacity is much lower than the theoretic capacity of silicon. Accordingly, manufactured batteries show low performance.

Accordingly, there is a need to develop an anode active material for a lithium secondary battery, the anode active material: which suppresses a volumetric change of silicon particles, occurring when a lithium secondary battery is charged or discharged, to decrease pulverization of silicon particles; which is prepared by using a simple process; and which is suitable for applications, such as mobile phones or electric vehicles, where repetitive cyclic characteristics are regarded as an important factor to be considered.

[Prior Art]

[Patent Documents]

    (D1) Japanese Patent Publication No. 2000-215887
    (D2) Japanese Patent Publication No. 2003-109590
    (D3) Japanese Patent Publication No. 2005-190902
    (D4) Japanese Patent Publication No. 2006-216374

WO 2013/025707 discloses an electrode composition comprising a silicon powder containing crystalline and non-crystalline silicon, where the crystalline silicon is present in the silicon powder at a concentration of no more than 20 wt %.

DETAILED DESCRIPTION OF THE INVENTION

TECHNICAL PROBLEM

One or more embodiments of the present disclosure provide an anode active material for a lithium secondary battery, wherein the anode active material contribute to a decrease in charging and discharging-induced volumetric change, and thus, pulverization of the silicon particles, which occurs due to volumetric expansion and shrinkage, is suppressed.

One or more embodiments of the present disclosure provide an anode active material for a lithium secondary battery, the anode active material having excellent initial efficiency, and excellent cycle lifespan characteristics due to a constant battery capacity maintained when the charge and discharge cycle is repeatedly performed.

One or more embodiments of the present disclosure provide an anode composition and a lithium secondary battery including the anode active material.

TECHNICAL SOLUTION

According to an aspect of an embodiment, an anode active material for a lithium secondary battery includes silicon secondary particles in which amorphous silicon primary particles and crystalline silicon primary particles are agglomerated, characterized in that the silicon secondary particles comprise spherical amorphous silicon primary particles and plate-shaped crystalline silicon primary particles..

In some embodiments, there are pores between the amorphous silicon primary particles and the crystalline silicon primary particles.

According to another aspect of an embodiment, an anode composition includes the silicon secondary particles, a conductive agent, and a binder, and a lithium secondary battery including the anode composition.

ADVANTAGEOUS EFFECTS OF THE INVENTION

According to embodiments of the present disclosure, silicon secondary particles, in which amorphous silicon primary particles and crystalline silicon primary particles are agglomerated, characterized in that the silicon secondary particle comprise spherical amorphous silicon primary particles and plate-shaped crystalline silicon primary particles, are used as an anode active material, and structural characteristics and internal pores of the agglomeration secondary particles are used as a buffer for a volumetric change of particles, leading to a decrease in volumetric change of an active material during charging and discharging. By doing this, pulverization of silicon particles may be suppressed, and ultimately, even when the cycle of charging and discharging cycle is repeatedly performed, capacity is maintained and thus, cycle lifespan characteristics may be improved.

Also, since a complicated diffusion pathway for lithium ions and lithium may be formed among the primary particles during agglomeration, in the complicated diffusion pathway, reactivity between and mobility of silicon and lithium may be increased, initial charge and discharge efficiency and charge characteristics (or rate characteristics) may be improved.

In addition, since silicon secondary particles, prepared by thermal decomposition or reduction of silane gas in an inert gas atmosphere, are used as an anode active material, an oxide film may not be formed on the surface of particles. Accordingly, the decrease in initial charge and discharge efficiency due to the oxide film may be prevented.

DESCRIPTION OF THE DRAWINGS

FIG. 1 shows a scanning electron microscope (SEM) image of silicon secondary particles prepared according to Example 1.
FIG. 2 shows an enlarged SEM image of portion I of FIG. 1.
FIG. 3 shows an enlarged SEM image of portion II of FIG. 1.
FIG. 4 shows a transmission electron microscope (TEM) image of silicon secondary particles prepared according to Example 1.
FIG. 5 shows an enlarged TEM image of portion III of FIG. 4.
FIG. 6 shows an enlarged TEM image of portion IV of FIG. 4.
FIG. 7 shows a SEM image of silicon particles prepared according to Comparative Example 1.
FIG. 8 shows energy dispersive x-ray spectroscopy (EDX) analysis results of portion III of FIG. 4.
FIG. 9 shows EDX analysis results of portion V of FIG. 4.
FIG. 10 shows a charge and discharge graph of a lithium battery manufactured by using an anode composition prepared according to Example 2.
FIG. 11 illustrate a diagram for comparing capacity retention ratios of lithium batteries manufactured by using anode composition prepared according to Example 2 and Comparative Example 2 after the lithium batteries are subjected to 20 cycles of a charge and discharge test.

MODE

The present disclosure relates to an anode active material for a lithium secondary battery, the anode active material including silicon secondary particles prepared by agglomerating amorphous silicon primary particles and crystalline silicon primary particles, characterized in that the silicon secondary particle comprise spherical amorphous silicon primary particles and plate-shaped crystalline silicon primary particles.

Herein, amorphous silicon is a material in which Si atoms are hardly regularly arranged. Unlike a crystalline material, the amorphous material does not have a single structure. Accordingly, when charged, the amorphous material may expand less than the crystalline material, and thus, may experience less the charging and discharging-induced deterioration than the crystalline material. In addition, the amorphous material has better power characteristics than the crystalline material, because an oxide film formed per volume has a smaller area, and through a complicated diffusion pathway, existing within the amorphous material, of lithium ions and lithium, a sufficient amount of lithium may be intercalated or deintercalated.

When synthesized in inert gas atmosphere, amorphous silicon may have a lower oxidation degree compared to when synthesized in an oxidizing atmosphere. Accordingly, the amorphous silicon may easily react with lithium to form a new phase, and may react with more lithium more quickly, showing a lower reaction resistance. Accordingly, within the structure of amorphous silicon, the increase in reactivity may be maximized to embody high capacity and excellent output characteristics, and charge characteristics.

Meanwhile, crystalline silicon primary particles consist of crystallites having various orientations, and when agglomerated with amorphous silicon primary particles, the crystalline silicon primary particles may allow pores to be included among the primary particles (including the crystalline silicon primary particles and the amorphous silicon primary particles), and may improve strength of the resultant silicon secondary particles.

Pores may exist between the crystalline silicon primary particles and the amorphous silicon primary particles constituting the silicon secondary particles according to the present disclosure. The pores may absorb a volumetric change of an active material when the cycle of charging and discharging is repeatedly performed, further suppressing the volumetric change of silicon materials, which are used as an active material, occurring when the silicon materials are charged and discharged. Accordingly, when the silicon secondary particles are used as an anode active material, pulverization of silicon particles, occurring during charging and discharging, may be prevented to provide better cycle characteristics. In some embodiments, the pores may be open pores, and since lithium ions permeate further into an active material, the surface area of Si that may react with lithium ions may be increased and thus a charge and discharge capacity may be improved.

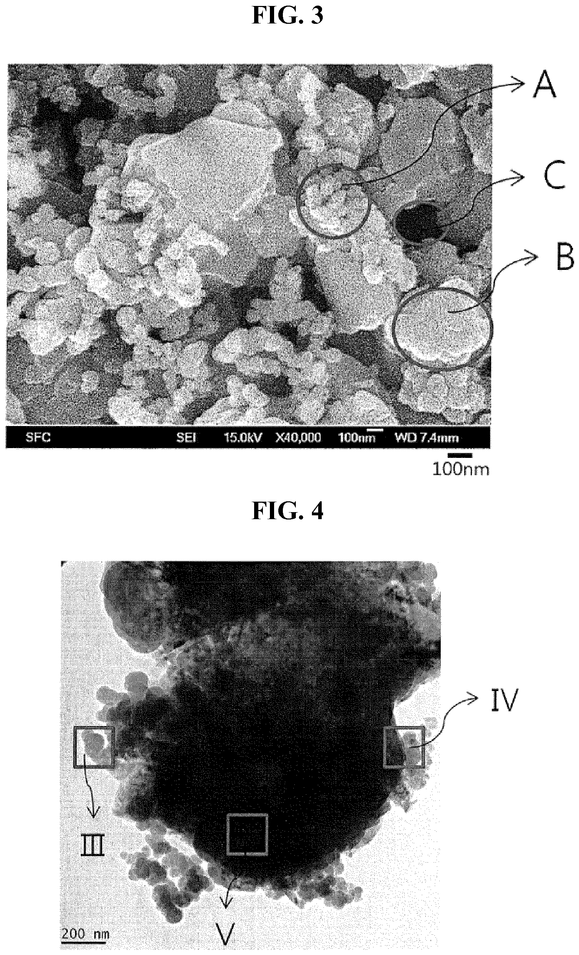

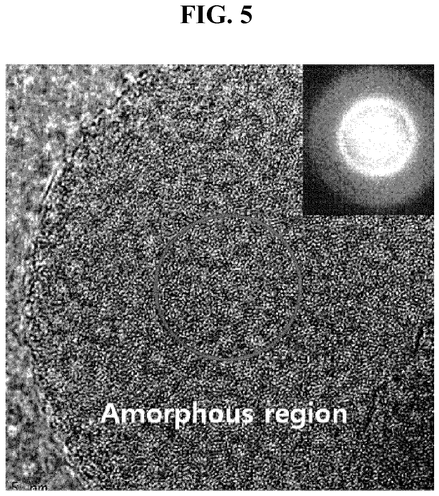

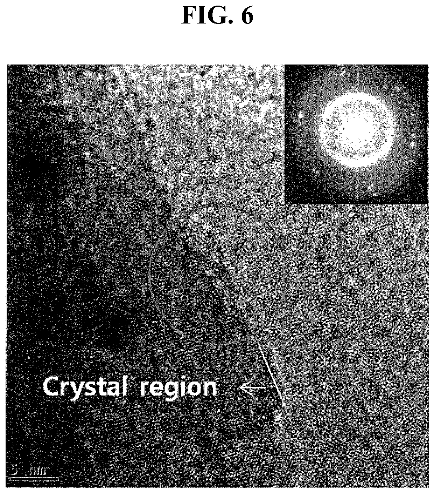

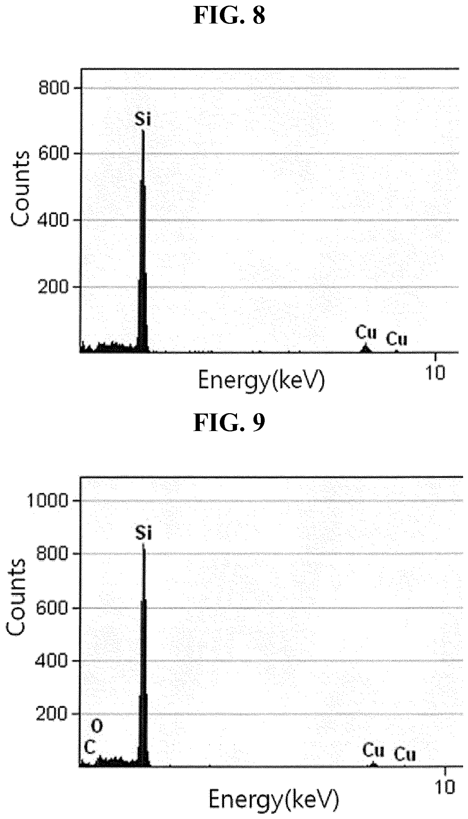

FIG. 3 shows a SEM image of silicon secondary particles prepared by agglomerating spherical amorphous silicon primary particles (A) and plate-shaped crystalline silicon primary particles (B), the silicon secondary particles having pores (C) marked in black among the primary particles. FIGS. 4 to 6 show TEM images of silicon secondary particles. Referring to FIGS. 4 to 6 showing the images of the secondary particles, there are portion III consisting of amorphous silicon primary particles, portion V consisting of crystalline silicon primary particles, and portion IV in which amorphous silicon primary particles and crystalline silicon primary particles overlap. FIGS. 8 and 9 show energy dispersive x-ray spectroscopy analysis results of the amorphous silicon primary particles (III) and crystalline silicon primary particles (V). Referring to FIGS. 8 and 9, it is seen that the portion III and the portion V all include silicon (Si).

The silicon secondary particles may have a true density of 1.8 to 2.3. When the true density exceeds 2.3, the number of open pores is relatively small and a crystalline degree is relatively high, and thus, it is difficult for lithium to permeate into the inside an active material, on the other hand, when the true density is less than 1.8, the ratio of closed pore is too high, an Si area where lithium ions react in an electrolytic solution may be reduced, and thus, charge and discharge capacity may be decreased. The true density may be measured according to a pycnometer method using pure water.

The silicon secondary particles may have a specific surface area of 2 $m^2$/g to 50 $m^2$/g. Herein, the specific surface area may be measured by using a BET(Brnauer,Emmett & Teller). When the specific surface area of the silicon secondary particles is less than 2 $m^2$/g, a reaction area thereof with respect to lithium ions may be reduced and accordingly, reactivity may be decreased. When the specific surface area of the silicon secondary particles exceeds 50 $m^2$/g, more binder is needed to retain current collecting properties, and manufacturing characteristics of an anode for a lithium secondary battery may be decreased. Accordingly, initial efficiency and cycle characteristics may all deteriorate.

An average diameter of the silicon secondary particles may be in a range of 4 urn to 15 $\mu$m. When the average diameter of the silicon secondary particles is outside this range, a mixture density of an anode may be decreased and uniformity in a high-speed anode coating process may be decreased. The average diameter refers to a volume average value D50 (that is, a diameter of a particle corresponding to 50% of an accumulative volume, or a median diameter) in a particle size distribution diagram obtained by laser-beam diffraction.

The silicon secondary particles may be an agglomeration product of amorphous silicon primary particles and crystalline silicon primary particles, the amorphous silicon primary particles may be obtained by thermally decomposing or reducing silane gas in an inert gas atmosphere at a temperature of, for example, 600°C to 1.400°C. These silicon secondary particles may be obtainable as a by-product produced in the manufacturing course of polycrystalline silicon by using, for example, a fluidized bed reactor (FBR, a product of MEMC Electronic Materials Company) method.

The silane gas may include at least one selected from monosilane, disilane, chlorosilane, dichlorosilane, and trichlorosilane, and the inert gas may include at least one selected from diborane gas, phosphine gas, and argon gas.

As described above, since the reaction is performed in the inert gas atmosphere, the oxidizing of the surface of silicon particles may be prevented, and accordingly, the manufactured lithium battery may have high charge and discharge efficiency. Further, since the amorphous silicon primary particles, crystalline silicon primary particles, and silicon secondary particles can be manufactured in a single reactor, the manufacturing process is simple and economically efficient.

An anode composition according to the present disclosure includes the silicon secondary particles, a conductive agent, and a binder. An amount of the silicon secondary particles may be in a range of 3 to 60 wt%, an amount of the conductive agent may be in a range of 20 to 96 wt%, and an amount of the binder may be in a range of 1 to 20 wt%.

When the amount of the silicon secondary particles is less than 3 wt%, the contribution of silicon to capacity in an anode may decrease and thus the capacity of the anode may be decreased. When the amount of the silicon secondary particles exceeds 60 wt%, the content of silicon in an electrode may be high and thus, the electrode may expand.

When the amount of the conductive agent is less than 20 wt%, conductivity may be decreased and thus, initial resistance may be increased. On the other hand, when the amount of the conductive agent exceeds 95 wt%, the capacity of the electrode may be decreased. The conductive agent is not limited, and may be any electrically conductive material that does not cause decomposition or change in properties. For example, the conductive agent may include at least one selected from hard carbon, graphite, and carbon fiber. For example, the conductive agent may be selected from natural graphite, artificial graphite, various cokes powder, mesophase carbon, vapor growth carbon fiber, pitch-based carbon fiber, PAN-based carbon fiber, and carbide, such as various resin calcination products.

When the amount of the binder is less than 1 wt%, an anode active material may be separated from a current collector; on the other hand, when the amount of the binder exceeds 20 wt%, silicon may be less impregnated with an electrolytic solution, leading to a decrease in mobility of Li ions. The binder may include at least one selected from polytetrafluorethylene (PTFE), polyvinylidene fluoride (PVdF), cellulose, styrenebutadienerubber (SBR), polyimide, polyacrylic acid), poly(methyl methacrylate) (PMMA), polyacrylonitrile (PAN), styrenebutadienerubber(SBR), carboxymethylcellulose (CMC), and a water-soluble polyacrylic acid (PAA).

Another aspect of embodiments provides a lithium secondary battery including the anode composition.

In detail, an anode for a lithium secondary battery is manufactured as follows: the anode composition and other additives are mixed with a solvent that is suitable for dissolving or dispersing a binder to prepare a mixture in a paste form, and the mixture is coated on a current collector in the sheet form. The binder available herein may be N-methylpyrrolidone or water. In this case, the current collector may include any material that is used for a current collector for an anode regardless of thickness and surface-treatment, and examples thereof are a copper foil or a nickel film. The molding process for molding the mixture in a sheet form is not particularly limited, and may be any known method. The obtained anode molding product is used in the manufacturing process of a non-aqueous electrolyte secondary battery. In this case, embodiments are featured in that a lithium secondary battery includes the anode active material, and materials for a cathode, a separator, an electrolytic solution, or a non-aqueous electrolyte and the shape of a battery are not limited.

Herein, examples of the disclosure will be described below. However, the disclosure is not limited to the following examples. An average diameter to be referred hereinafter is denoted by D50 (a median diameter), that is, a diameter of a particle corresponding to 50% of an accumulative volume in a particle size distribution diagram obtained by laser-beam diffraction.

< Preparation of anode active material for lithium secondary battery >

Example 1

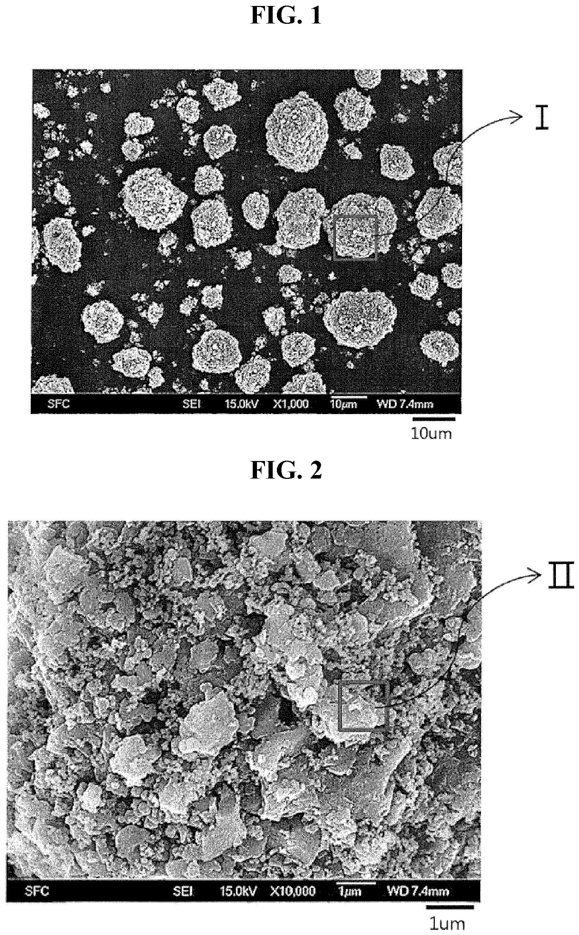

In an argon stream, polycrystalline silicon particles (seed) were introduced into a fluidized bed reactor having an inner temperature of 800°C, and monosilane was loaded thereto. Then, amorphous silicon primary particles prepared by thermal decomposition of the monosilane and crystalline silicon primary particles prepared by growing the seed were grown in a mixed form to produce silicon secondary particles, which is an agglomeration product of amorphous silicon primary particles and crystalline silicon primary particles. The silicon secondary particles were classified by using a classifier (TC-15, a product of Nisshin Engineering Company) to obtain silicon powder (Si 1) having D50 of 10 $\mu$m. A specific surface area of the silicon secondary particles, measured by using BET (Brunauer, Emmett, Teller), was 3 $m^2$/g. FIGS. 1 to 3 show scanning electron microscope (SEM) images of silicon secondary particles, and FIGS. 4 to 6 shows high-resolution transmission electron microscope (HRTEM) images of silicon secondary particles.

Comparative Example 1

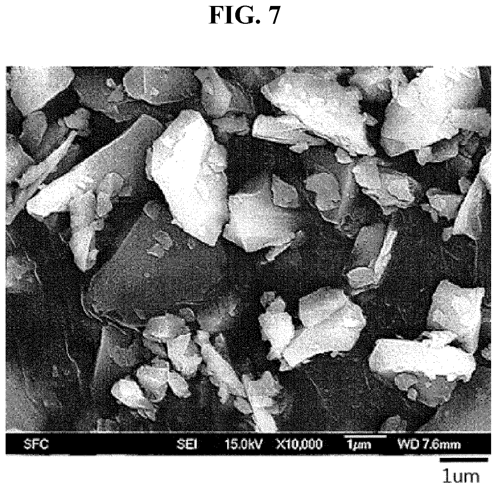

Polycrystalline silicon ingot was placed in a heating vessel at an inner temperature of 800°C, and monosilane was supplied thereinto to produce rod-shaped polycrystalline silicon. The rod-shaped polycrystalline silicon was crashed by using a coarse crusher and then pulverized by using a jet mill (AFG-100, a product of Hosokawa Micron Company). The obtained particles were classified by using a classifier (TC-15, a product of Nisshin Engineering Company) to obtain polycrystalline silicon powder (Si 2) having D50 of 9.8 $\mu$m. A specific surface area of the obtained polycrystalline silicon powder, measured by using BET (Brunauer, Emmett, Teller), was 0.8 $m^2$/g. The obtained polycrystalline silicon powder did not have pores in its crystal structure. FIG. 7 shows a SEM image of particles.

< Preparation of anode composition for lithium secondary battery>

Example 2

The silicon powder prepared according to Example 1, graphite (artificial graphite, AG), which acts as a conductive agent, and carboxymethylcellulose (CMC) and styrenebutadienerubber (SBR), which act as a binder, were mixed with pure water, and the mixture was stirred to obtain slurry having a solid content of 49.7%. The amount of the solid content is shown in Table 1.

Comparative Example 2

Slurry having a solid content of 49.7% was obtained in the same manner as in Example 2, except that the amount of the solid content was adjusted as shown in Table 1.

Table 1

|  | Example 2 | Comparative Example 2 |
|---|---|---|
| Si 1* | 13 wt% | - |
| Si 2* | - | 13 wt% |
| CMC | 1 wt% | 1 wt% |
| SBR | 1.5 wt% | 1.5 wt% |
| AG | 84.5 wt% | 84.5 wt% |
| * Si 1 and Si 2 indicate silicon powder prepared according to Example 1 and silicon powder prepared according to Comparative Example 1, respectively. | | |

<Evaluation on initial efficiency and cycle characteristics>

The slurry of Example 2 and Comparative Example 2 was coated on a copper foil having a thickness of 12 $\mu$m by using a 50 $\mu$m doctor blade, and after 20 minutes of drying at a temperature of 110□. The resultant was pressed and molded by using a roller press, and then, punched to produce an anode (molding product) having an area of 2 cm$^2$.
The anode was used together with a counter electrode including Li as a material for a cathode, a 1.5 mol/L non-aqueous electrolyte solution prepared by dissolving lithium hexafluorophosphate in a mixed solution including ethylenecarbonate, diethylcarbonate, and fluoroethylenecarbonate, which is a non-aqueous electrolyte, a polyethylene-based microporous film having a thickness of 17 $\mu$m, which is a separator, to manufacture a coin-type lithium ion secondary battery.
The coin-type lithium ion secondary battery was placed in a constant-temperature bath at a temperature of 25□ for 24 hours, and then, tested by using a secondary battery charge and discharge test device (a product of Toyo System Company). In this regard, a voltage region of a test cell was set in a range of 0.02 V-1.5 V, and in a constant current (CC)/constant voltage (CV) mode, charging and discharging was performed once at the current of 0.05C to evaluate charge capacity, and initial charge and discharge efficiency. After the first cycle, in a CC/CV mode, charging and discharging was performed 20 cycles at the current of 0.5C.
A ratio of a discharge capacity with respect to the first charge capacity was defined as initial efficiency, and a capacity retention ratio after 20 cycles was evaluated and results thereof are shown in Table 2.

Table 2

| | Discharge capacity (mAh/g-layer) | Charge capacity (mAh/g-layer) | Initial efficiency * | 20 cycle capacity retention ratio ** |
|---|---|---|---|---|
| Example 2 | 743.4 | 799.06 | 93.03% | 79.5% |
| Comparative Example 2 | 733.6 | 831.8 | 88.2% | 41.0% |

*

Initial efficiency (%) = (Discharge capacity/charge capacity)*100

** Capacity retention ratio (%) = (20 cycle-post discharge capacity/initial discharge capacity)*100

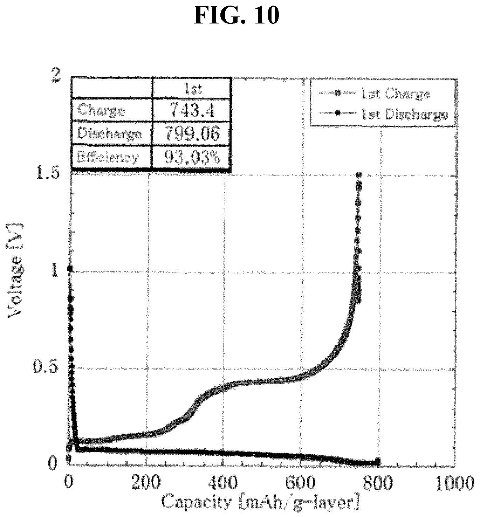

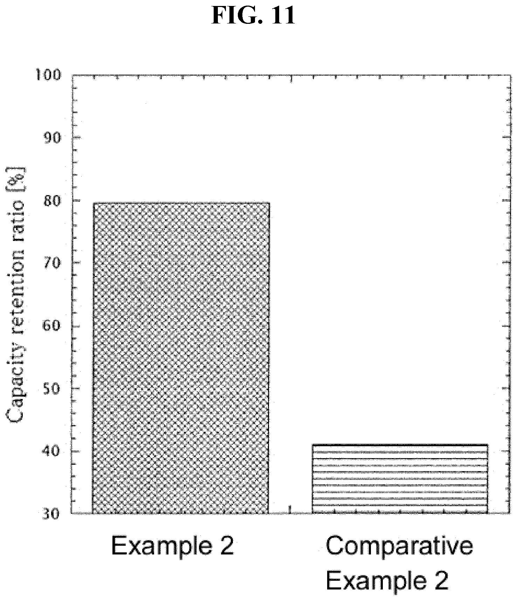

Referring to Table 2, when the silicon powder of Example 2 was used as an anode active material, an initial efficiency was 93% and a capacity retention ratio was 79.5%, values being higher than when that of Comparative Example 2 was used. These effects are clearer when FIGS. 10 and 11 are taken into consideration: FIG. 10 shows charge and discharge characteristics of a lithium battery including an anode active material and FIG. 11 shows a graph of a capacity retention ratio.

Referring to FIGS. 1 to 3 showing SEM images of the silicon power prepared according to Example 1 and FIGS. 4 to 6 showing TEM image images thereof, it is seen that amorphous silicon primary particles (A) and crystalline silicon primary particles (B) are agglomerated into silicon secondary particles, and pores (C) are present among amorphous silicon primary particles (A) and crystalline silicon primary particles (B). However, referring to FIG. 7, the silicon powder prepared according to Comparative Example 1 did not have pores in its crystal structure.

## Claims

1. An anode active material for a lithium secondary battery, the anode active material comprising silicon secondary particles in which amorphous silicon primary particles and crystalline silicon primary particles are agglomerated, **characterized in that** the silicon secondary particles comprise spherical amorphous silicon primary particles and plate-shaped crystalline silicon primary particles.

2. The anode active material of claim 1, wherein pores are present among the amorphous silicon primary particles and the crystalline silicon primary particles.

3. The anode active material of claim 1, wherein
   the silicon secondary particles have a specific surface area of 2 m$^2$/g to 50 m$^2$/g.

4. The anode active material of claim 1, wherein
   the silicon secondary particles has an average diameter (D50) of 4 to 15 $\mu$m.

5. An anode composition comprising the silicon secondary particles of any one of claims 1-4, a conductive agent, and a binder.

6. The anode composition of claim 5, wherein
   an amount of the silicon secondary particles is in a range of 3 to 60 wt%, an amount of the conductive agent is in a range of 20 to 96 wt%, and an amount of the binder is in a range of 1 to 20 wt%.

7. The anode composition of claim 5, wherein
   the conductive agent comprises at least one selected from hard carbon, graphite, and carbon fiber.

8. The anode composition of claim 5, wherein
   the binder comprises at least one selected from polytetrafluorethylene (PTFE), polyvinylidene fluoride (PVdF), cellulose, styrenebutadienerubber (SBR), polyimide, polyacrylic acid, poly(methyl methacrylate) (PMMA), polyacrylonitrile (PAN), styrenebutadienerubber(SBR), carboxymethylcellulose (CMC), and a water-soluble polyacrylic acid (PAA).

9. A method of preparing the anode active material of claim 1, comprising:
   thermally decomposing or reductively decomposing silane gas in an inert gas atmosphere, in the presence of crystalline silicon primary particles, to obtain the silicon secondary particles comprising the amorphous silicon primary particles and crystalline silicon primary particles.

10. A lithium secondary battery comprising the anode composition of claim 5.

## Patentansprüche

1. Anodenaktives Material für eine Lithium-Sekundärbatterie, wobei das anodenaktive Material Silizium-Sekundärteilchen umfasst, in denen amorphe Silizium-Primärteilchen und kristalline Silizium-Primärteilchen agglomeriert sind, **dadurch gekennzeichnet, dass** die Silizium-Sekundärteilchen sphärische amorphe Silizium-Primärteilchen und plattenförmige kristalline Silizium-Primärteilchen umfassen.

**2.** Anodenaktives Material nach Anspruch 1, wobei unter den amorphen Silizium-Primärteilchen und den kristallinen Silizium-Primärteilchen Poren vorhanden sind.

**3.** Anodenaktives Material nach Anspruch 1, wobei
die Silizium-Sekundärteilchen eine spezifische Oberfläche von 2 $m^2$/g bis 50 $m^2$/g aufweisen.

**4.** Anodenaktives Material nach Anspruch 1, wobei
die Silizium-Sekundärteilchen einen mittleren Durchmesser (D50) von 4 bis 15 $\mu$m aufweisen.

**5.** Anodenzusammensetzung, welche die Silizium-Sekundärteilchen nach einem der Ansprüche 1 bis 4, eine leitfähige Substanz und ein Bindemittel umfasst.

**6.** Anodenzusammensetzung nach Anspruch 5, wobei
eine Menge der Silizium-Sekundärteilchen in einem Bereich von 3 bis 60 Gew.-% liegt, eine Menge der leitfähigen Substanz in einem Bereich von 20 bis 96 Gew.-% liegt und eine Menge des Bindemittels in einem Bereich von 1 bis 20 Gew.-% liegt.

**7.** Anodenzusammensetzung nach Anspruch 5, wobei
die leitfähige Substanz mindestens eine Substanz umfasst, die ausgewählt ist aus hartem Kohlenstoff, Graphit und Kohlefaser.

**8.** Anodenzusammensetzung nach Anspruch 5, wobei
das Bindemittel mindestens eine Substanz umfasst, die ausgewählt ist aus Polytetrafluorethylen (PTFE), Polyvinylidenfluorid (PVdF), Cellulose, Styrol-Butadien-Kautschuk (SBR), Polyimid, Polyacrylsäure, Polymethylmethacrylat (PMMA), Polyacrylonitril (PAN), Styrol-Butadien-Kautschuk (SBR), Carboxymethylcellulose (CMC) und einer wasserlöslichen Polyacrylsäure (PAA).

**9.** Verfahren zur Herstellung des anodenaktiven Materials nach Anspruch 1, umfassend:
thermisches Zersetzen oder reduktives Zersetzen von Silangas in einer inerten Gasatmosphäre in Gegenwart kristalliner Silizium-Primärteilchen, um die Silizium-Sekundärteilchen zu erhalten, welche die amorphen Silizium-Primärteilchen und kristalline Silizium-Primärteilchen umfassen.

**10.** Lithium-Sekundärbatterie, welche die Anodenzusammensetzung nach Anspruch 5 umfasst.

## Revendications

**1.** Matériau actif d'anode pour une batterie secondaire au lithium, le matériau actif d'anode comprenant des particules secondaires de silicium dans lesquelles des particules primaires de silicium amorphe et des particules primaires de silicium cristallin sont agglomérées, **caractérisé en ce que** les particules secondaires de silicium comprennent des particules primaires de silicium amorphe sphériques et des particules primaires de silicium cristallin sous forme de plaques.

**2.** Matériau actif d'anode selon la revendication 1, des pores étant présents parmi les particules primaires de silicium amorphe et les particules primaires de silicium cristallin.

**3.** Matériau actif d'anode selon la revendication 1,
les particules secondaires de silicium ayant une surface spécifique de 2 $m^2$/g à 50 $m^2$/g.

**4.** Matériau actif d'anode selon la revendication 1,
les particules secondaires de silicium ayant un diamètre moyen (D50) de 4 à 15 $\mu$m.

**5.** Composition d'anode comprenant les particules secondaires de silicium selon l'une quelconque des revendications 1 à 4, un agent conducteur et un liant.

**6.** Composition d'anode selon la revendication 5,
une quantité des particules secondaires de silicium étant comprise entre 3 et 60 % en poids, une quantité de l'agent conducteur étant comprise entre 20 et 96 % en poids et une quantité du liant étant comprise entre 1 et 20 % en poids.

**7.** Composition d'anode selon la revendication 5,
l'agent conducteur comprenant au moins un élément choisi parmi le carbone dur, le graphite et la fibre de carbone.

**8.** Composition d'anode selon la revendication 5,
le liant comprenant au moins un liant choisi parmi le polytétrafluoréthylène (PTFE), le difluorure de polyvinylidène (PVdF), la cellulose, le caoutchouc styrène-butadiène (SBR), le polyimide, l'acide polyacrylique, le poly(méthacrylate de méthyle) (PMMA), le polyacrylonitrile (PAN), le caoutchouc styrène-butadiène (SBR), la carboxyméthylcellulose (CMC) et un polyacrylique hydrosoluble (PAA).

**9.** Procédé de préparation du matériau actif d'anode selon la revendication 1, comprenant l'étape consistant à :
décomposer thermiquement ou décomposer de manière réductrice du silane gazeux dans une atmosphère de gaz inerte, en présence de particules primaires de silicium cristallin, pour obtenir les particules secondaires de silicium comprenant les particules primaires de silicium amorphe et les particules primaires de silicium cristallin.

**10.** Batterie secondaire au lithium comprenant la composition d'anode selon la revendication 5.

## FIG. 1

## FIG. 2

## FIG. 3

## FIG. 4

# FIG. 5

FIG. 6

# FIG. 7

SFC          SEI     15.0kV   X10,000    1μm     WD 7.6mm

1um

**FIG. 8**

**FIG. 9**

## FIG. 10

**FIG. 11**

# EP 3 021 385 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000215887 A
- JP 2003109590 A
- JP 2005190902 A
- JP 2006216374 A
- WO 2013025707 A